# EUROPÄISCHE PATENTSCHRIFT

(11) **EP 1 521 923 B1**
(45) Veröffentlichungstag und Bekanntmachung des Hinweises auf die Patenterteilung: **06.10.2010**
(21) Anmeldenummer: 03763713.9
(22) Anmeldetag: 05.07.2003
(51) Int. Cl.: F16H 3/66

(54) **MEHRSTUFENGETRIEBE**
MULTI-SPEED GEARBOX
BOITE DE VITESSES MULTI-ETAGEE

(30) Priorität: 11.07.2002 DE 10231348
(43) Veröffentlichungstag der Anmeldung: 13.04.2005
(73) Patentinhaber: ZF Friedrichshafen AG, 88038 Friedrichshafen (DE)
(72) Erfinder: GUMPOLTSBERGER, Gerhard, 88045 Friedrichshafen (DE)
(86) Internationale Anmeldenummer: PCT/EP2003/007215
(87) Internationale Veröffentlichungsnummer: WO 2004/007995

(56) Entgegenhaltungen:
- DE-A- 10 043 751
- US-A- 5 226 862
- US-A1- 2003 162 623
- US-A1- 2003 162 624
- PATENT ABSTRACTS OF JAPAN vol. 016, no. 195 (M-1246), 12. Mai 1992 (1992-05-12) -& JP 04 029650 A (NISSAN MOTOR CO LTD), 31. Januar 1992 (1992-01-31)

## Beschreibung

Die vorliegende Erfindung betrifft ein Mehrstufengetriebe in Planetenbauweise, insbesondere ein Automatgetriebe für ein Kraftfahrzeug gemäß dem Oberbegriff des Patentanspruchs 1.

Aus der DE 100 43751 ist ein Getriebe mit den Merkmalen des Oberbegriffes des Anspruchs 1 bekannt.

Automatgetriebe, insbesondere für Kraftfahrzeuge, umfassen nach dem Stand der Technik Planetensätze, die mittels Reibungs- bzw. Schaltelementen wie etwa Kupplungen und Bremsen geschaltet werden und üblicherweise mit einem einer Schlupfwirkung unterliegenden und wahlweise mit einer Überbrückungskupplung versehenen Anfahrelement wie etwa einem hydrodynamischen Drehmomentwandler oder einer Strömungskupplung verbunden sind.

Ein derartiges Getriebe geht aus der EP 0 434 525 A1 hervor. Es umfasst im wesentlichen eine Antriebswelle und eine Abtriebswelle, die parallel zueinander angeordnet sind, einen konzentrisch zur Abtriebswelle angeordneten Doppelplanetenradsatz und fünf Schaltelemente in der Form von drei Kupplungen und zwei Bremsen, deren wahlweise Sperrung jeweils paarweise die verschiedenen Gangübersetzungen zwischen der Antriebswelle und der Abtriebswelle bestimmt. Hierbei weist das Getriebe einen Vorschaltradsatz und zwei Leistungswege auf, so dass durch das selektive paarweise Eingreifen der fünf Schaltelemente sechs Vorwärtsgänge erzielt werden.

Hierbei werden bei dem ersten Leistungsweg zwei Kupplungen zur Übertragung des Drehmomentes vom Vorschaltradsatz zu zwei Elementen des Doppelplanetenradsatzes benötigt. Diese sind in Kraftflussrichtung im wesentlichen hinter dem Vorschaltradsatz in Richtung Doppelplanetenradsatz angeordnet. Bei dem zweiten Leistungsweg ist eine weitere Kupplung vorgesehen, die diesen mit einem weiteren Element des Doppelplanetenradsatzes lösbar verbindet. Hierbei sind die Kupplungen derart angeordnet, dass der Innenlammelenträger den Abtrieb bildet.

Des weiteren ist aus der Druckschrift US 6,139,463 ein kompaktes Mehrstufengetriebe in Planetenbauweise, insbesondere für ein Kraftfahrzeug bekannt, welches zwei Planetenradsätze und einen Vorschaltradsatz sowie drei Kupplungen und zwei Bremsen aufweist. Bei diesem bekannten Mehrstufengetriebe sind bei einem ersten Leistungsweg zwei Kupplungen C-1 und C-3 zum Übertragen des Drehmoments vom Vorschaltradsatz zu den beiden Planetenradsätzen vorgesehen. Hierbei ist der Außenlamellenträger bzw. die Zylinder- bzw. Kolben- und Druckausgleichsseite der Kupplung C-3 mit einer ersten Bremse B-1 verbunden. Zudem ist der Innenlamellenträger der dritten Kupplung C-3 mit der Zylinder- bzw. Kolben- und Druckausgleichsseite der ersten Kupplung C-1 verbunden, wobei der Innenlamellenträger der ersten Kupplung C-1 abtriebsseitig angeordnet ist und mit einem Sonnenrad des dritten Planetenradsatzes verbunden ist.

Des weiteren ist aus der DE 199 49 507 A1 der Anmelderin ein Mehrstufengetriebe bekannt, bei dem an der Antriebswelle zwei nicht schaltbare Vorschaltradsätze vorgesehen sind, die ausgangsseitig zwei Drehzahlen erzeugen, die neben der Drehzahl der Antriebswelle wahlweise auf einen auf die Abtriebswelle wirkenden, schaltbaren Doppelplanetenradsatz durch selektives Schließen der verwendeten Schaltelemente derart schaltbar sind, dass zum Umschalten von einem Gang in den jeweils nächst folgenden höheren oder niedrigeren Gang von den beiden gerade betätigten Schaltelementen jeweils nur ein Schaltelement zu- oder abgeschaltet werden muss.

Des weiteren ist aus der DE 199 12 480 A1 ein automatisch schaltbares Kraftfahrzeuggetriebe mit drei Einsteg-Planetensätzen sowie drei Bremsen und zwei Kupplungen zum Schalten von sechs Vorwärtsgängen und einem Rückwärtsgang und mit einer Antriebs- sowie einer Abtriebswelle bekannt. Das automatisch schaltbare Kraftfahrzeuggetriebe ist derart ausgebildet, dass die Antriebswelle direkt mit dem Sonnenrad des zweiten Planetensatzes verbunden ist und dass die Antriebswelle über die erste Kupplung mit dem Sonnenrad des ersten Planetensatzes und/oder über die zweite Kupplung mit dem Steg des ersten Planetensatzes verbindbar ist. Zusätzlich oder alternativ ist das Sonnenrad des ersten Planetensatzes über die erste Bremse mit dem Gehäuse des Getriebes und/oder der Steg des ersten Planetensatzes über die zweite Bremse mit dem Gehäuse und/oder dem Sonnenrad des dritten Planetensatzes über die dritte Bremse mit dem Gehäuse verbindbar.

Der vorliegenden Erfindung liegt die Aufgabe zugrunde, ein Mehrstufengetriebe der eingangs genannten Art vorzuschlagen, bei dem der Bauaufwand optimiert wird und zudem der Wirkungsgrad in den Hauptfahrgängen hinsichtlich der Schlepp- und Verzahnungsverluste verbessert wird. Zudem sollen bei dem erfindungsgemäßen Mehrstufengetriebe geringe Momente auf die Schaltelemente und Planetensätze wirken sowie die Drehzahlen der Wellen, Schaltelemente und Planetensätze möglicht gering gehalten werden. Des weiteren soll die Anzahl der Gänge sowie die Getriebespreizung erhöht werden.

Diese Aufgabe wird erfindungsgemäß durch die Merkmale des Patentanspruches 1 gelöst. Weitere Vorteile und vorteilhafte Ausgestaltungen gehen aus den Unteransprüchen hervor.

Demnach wird ein erfindungsgemäßes Mehrstufengetriebe in Planetenbauweise vorgeschlagen, welches eine Antriebswelle und eine Abtriebswelle aufweist, welche in einem Gehäuse angeordnet sind. Des weiteren sind zumindest drei Einstegplanetensätze, mindestens sieben drehbare Wellen sowie zumindest sechs Schaltelemente, umfassend Bremsen und Kupplungen, vorgesehen, deren selektives Eingreifen verschiedene Übersetzungsverhältnisse zwischen der Antriebswelle und der Abtriebswelle bewirken, sodass vorzugsweise sieben Vorwärtsgänge und ein Rückwärtsgang realisierbar sind.

Gemäß der vorliegenden Erfindung ist bei dem Mehrstufenschaltgetriebe vorgesehen, dass der Antrieb durch eine Antriebswelle erfolgt, welche ständig mit dem Sonnenrad des ersten Planetensatzes verbunden ist und dass der Abtrieb über eine Abtriebswelle erfolgt, welche mit dem Steg des dritten Planetensatzes verbunden ist. Des weiteren ist bei dem erfindungsgemäßen Mehrstufengetriebe vorgesehen, dass eine weitere Welle ständig mit dem Sonnenrad des dritten Planetensatzes verbunden ist, dass eine weitere Welle ständig mit dem Hohlrad des ersten Planetensatzes und dem Hohlrad des zweiten Planetensatzes verbunden ist, dass eine andere Welle ständig mit einem Element des zweiten Planetensatzes und dem Hohlrad des dritten Planetensatzes verbunden ist, dass eine weitere Welle ständig mit einem weiteren Element des zweiten Planetensatzes verbunden ist, und dass eine weitere Welle ständig mit dem Steg des ersten Planetensatzes verbunden ist, wobei die Planetensätze mit Wellen und Schaltelementen gekoppelt sind. Hierbei kann erfindungsgemäß die mit dem Hohlrad des dritten Planetensatzes verbundene fünfte Welle mit dem Sonnenrad oder dem Steg des zweiten Planetensatzes verbunden sein, wobei dementsprechend die eine weitere mit dem zweiten Planetensatz verbundene sechste Welle mit dessen Steg bzw. Sonnenrad verbunden ist. Der erste und der dritte Planetensatz sind erfindungsgemäß als Minus-Planetensätze ausgebildet; der zweite Planetensatz ist ein Plus-Planetensatz.

Durch die erfindungsgemäße Ausgestaltung des Mehrstufengetriebes ergeben sich geeignete Übersetzungen sowie eine erhebliche Erhöhung der Gesamtspreizung des Mehrstufengetriebes, wodurch eine Verbesserung des Fahrkomforts und eine signifikante Verbrauchsabsenkung bewirkt werden.

Das erfindungsgemäße Mehrstufengetriebe eignet sich für jedes Kraftfahrzeug, insbesondere für Personenkraftfahrzeuge und für Nutzkraftfahrzeuge, wie z. B. Lastkraftwagen, Busse, Baufahrzeuge, Schienenfahrzeuge, Gleiskettenfahrzeuge und dergleichen.

Darüber hinaus wird mit dem erfindungsgemäßen Mehrstufengetriebe durch eine geringe Anzahl an Schaltelementen, vorzugsweise vier Kupplungen und zwei Bremsen, der Bauaufwand erheblich reduziert. In vorteilhafter Weise ist es mit dem erfindungsgemäßen Mehrstufengetriebe möglich, ein Anfahren mit einem hydrodynamischen Wandler, einer externen Anfahrkupplung oder auch mit sonstigen geeigneten externen Anfahrelementen durchzuführen. Es ist auch denkbar, einen Anfahrvorgang mit einem im Getriebe integrierten Anfahrelement zu ermöglichen. Vorzugsweise eignet sich ein Schaltelement, welches im ersten Gang und in den Rückwärtsgängen betätigt wird.

Darüber hinaus ergibt sich bei dem erfindungsgemäßen Mehrstufengetriebe ein guter Wirkungsgrad in den Hauptfahrgängen bezüglich der Schlepp- und Verzahnungsverluste.

Des weiteren liegen geringe Momente in den Schaltelementen und in den Planetensätzen des Mehrstufengetriebes vor, wodurch der Verschleiß bei dem Mehrstufengetriebe in vorteilhafter Weise reduziert wird. Ferner wird durch die geringen Momente eine entsprechend geringe Dimensionierung ermöglicht, wodurch der benötigte Bauraum und die entsprechenden Kosten reduziert werden. Darüber hinaus liegen auch geringe Drehzahlen bei den Wellen, den Schaltelementen und den Planetensätzen vor.

Außerdem ist das erfindungsgemäße Getriebe derart konzipiert, dass eine Anpassbarkeit an unterschiedliche Triebstrangausgestaltungen sowohl in Kraftflussrichtung als auch in räumlicher Hinsicht ermöglicht wird.

Die Erfindung wird im folgenden anhand der Zeichnungen beispielhaft näher erläutert.
In diesen stellen dar:
- Fig. 1: eine schematische Ansicht einer bevorzugten Ausführungsform eines erfindungsgemäßen Mehrstufengetriebes;
- Fig. 2: eine schematische Ansicht einer weiteren bevorzugten Ausführungsform eines erfin- dungsgemäßen Mehrstufengetriebes und
- Fig. 3: ein Schaltschema für das erfindungsgemäße Mehrstufengetriebe gemäß Fig. 1 und Fig. 2.

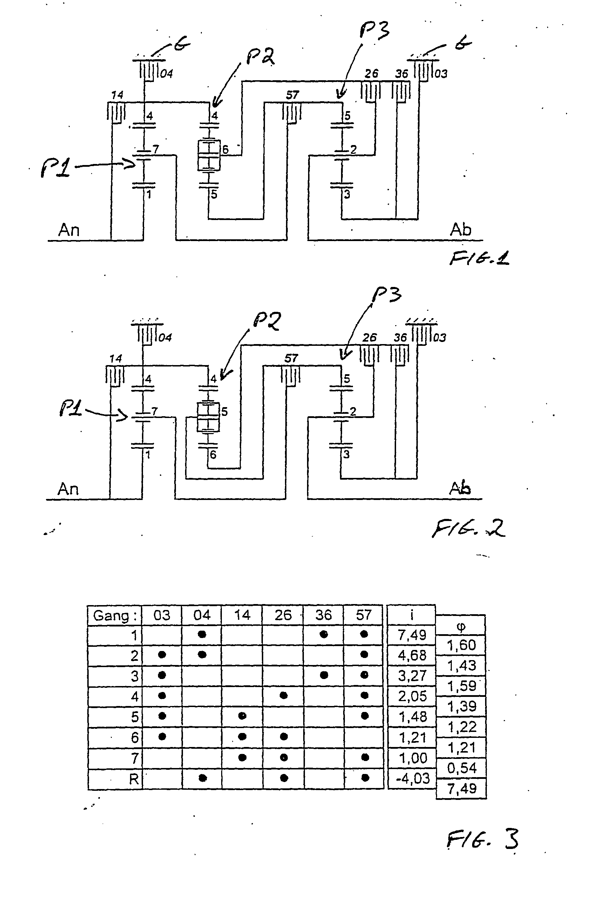

In den Fig. 1 und 2 ist das erfindungsgemäße Mehrstufengetriebe mit einer Antriebswelle 1 (An) und einer Abtriebswelle 2 (Ab) dargestellt, welche in einem Gehäuse G angeordnet sind. Es sind drei Einsteg-Planetensätze P1, P2, P3 vorgesehen. Hierbei sind der erste Planetensatz P1 und der dritte Planetensatz P3 als Minus-Planetensätze ausgebildet; der erste Planetensatz P1 ist gemäß der Erfindung als Plus-Planetensatz ausgebildet.

Wie aus den Fig. 1 und 2 ersichtlich, sind lediglich sechs Schaltelemente, nämlich zwei Bremsen 03, 04 sowie vier Kupplungen 14, 26, 36, und 57 vorgesehen.

Mit den Schaltelementen ist ein selektives Schalten von sieben Vorwärtsgängen und einem Rückwärtsgang realisierbar. Das erfindungsgemäße Mehrstufengetriebe weist gemäß Fig. 1 insgesamt sieben drehbare Wellen auf, nämlich die Wellen 1, 2, 3, 4, 5, 6 und 7.

Erfindungsgemäß ist bei dem Mehrstufengetriebe gemäß Fig. 1 vorgesehen, dass der Antrieb durch die Antriebswelle 1 erfolgt, welche ständig mit dem Sonnenrad des ersten Planetensatzes P1 verbunden ist. Der Abtrieb erfolgt über die Abtriebswelle 2, welche mit dem Steg des dritten Planetensatzes P3 verbunden ist. Des weiteren ist die dritte Welle 3 ständig mit dem Sonnenrad des dritten Planetensatzes P3 und die vierte Welle 4 ist ständig mit dem Hohlrad des ersten Planetensatzes P1 und dem Hohlrad des zweiten Planetensatzes P2 verbunden. Dar-über hinaus ist die fünfte Welle 5 ständig mit dem Sonnenrad des zweiten Planetensatzes P2 und dem Hohlrad des dritten Planetensatzes P3 verbunden. Die weitere drehbare sechste Welle 6 ist erfindungsgemäß ständig mit dem Steg des zweiten Planetensatzes P2 verbunden, wobei die siebte Welle 7 ständig mit dem Steg des ersten Planetensatzes P1 verbunden ist.

Bei dem erfindungsgemäßen Mehrstufengetriebe ist die dritte Welle 3 durch die erste Bremse 03 und die vierte Welle 4 durch die zweite Bremse 04 an das Gehäuse G ankoppelbar. Die erste Kupplung 14 verbindet die Antriebswelle 1 und die vierte Welle 4 lösbar miteinander; die zweite Welle 2 und die sechste Welle 6 sind über die zweite Kupplung 26 lösbar miteinander verbindbar. Des weiteren verbindet die dritte Kupplung 36 die dritte und die sechste Welle 3 und 6 und die vierte Kupplung 57 die fünfte und siebte Welle 5 und 7 lösbar miteinander.

In Fig. 2 ist eine weitere Ausführungsform des erfindungsgemäßen Mehrstufengetriebes gezeigt. Der einzige Unterschied gegenüber der Ausführungsform gemäß Fig. 1 besteht darin, dass die fünfte Welle 5 mit dem Steg des zweiten Planetensatzes P2 und dem Hohlrad des dritten Planetensatzes P3 verbunden ist und dass die sechste Welle 6 ständig mit dem Sonnenrad des zweiten Planetensatzes P2 verbunden ist.

In Fig. 3 ist ein Schaltschema des erfindungsgemäßen Mehrstufengetriebes gemäß den Fig. 1 und 2 dargestellt. Dem Schaltschema können die jeweiligen Übersetzungen i der einzelnen Gangstufen und die daraus zu bestimmenden Stufensprünge ϕ beispielhaft entnommen werden. Des weiteren kann dem Schaltschema entnommen werden, dass bei sequentieller Schaltweise Doppelschaltungen vermieden werden, da zwei benachbarte Gangstufen jeweils zwei Schaltelemente gemeinsam benutzen.

Für den ersten Gang sind die zweite Bremse 04 und die dritten und vierte Kupplung 36 und 57 aktiviert. Der zweite Gang ergibt sich aus der ersten Bremse 03, der zweiten Bremse 04 und der vierten Kupplung 57 und der dritte Gang aus den dritten und vierten Kupplungen 36, 57 und der ersten Bremse 03. Beim vierten Gang sind die zweite und vierte Kupplung 26 und 57 sowie die Bremse 03 aktiviert. Gemäß Fig. 3 ergibt sich der fünfte Gang durch Schließen der ersten und vierten Kupplung 14 und 57 und der ersten Bremse 03; der sechste Gang erfordert die Kombination der ersten und zweiten Kupplung 14, 26 und der ersten Bremse 03. Für den siebten Gang sind die erste, zweite und vierte Kupplung 14, 26 und 57 erforderlich, während sich der Rückwärtsgang durch Schließen der zweiten Bremse 04 und der zweiten und vierten Kupplung 26 und 57 ergibt.

Gemäß der Erfindung ist es möglich, an jeder geeigneten Stelle des Mehrstufengetriebes zusätzliche Freiläufe vorzusehen, beispielsweise zwischen einer Welle und dem Gehäuse oder um zwei Wellen gegebenenfalls zu verbinden.

Zudem ist es durch die erfindungsgemäße Bauweise möglich, Antrieb und Abtrieb vorzugsweise für Quer-, Front-Längs-, Heck-Längs- oder Allradanordnungen auf der gleichen Seite des Getriebes bzw. des Gehäuses anzuordnen. Auf der Antriebsseite oder auf der Abtriebsseite können zudem ein Achsdifferential und/oder ein Verteilerdifferential angeordnet werden.

Im Rahmen einer vorteilhaften Weiterbildung kann die Antriebswelle 1 durch ein Kupplungselement von einem Antriebs-Motor nach Bedarf getrennt werden, wobei als Kupplungselement ein hydrodynamischer Wandler, eine hydraulische Kupplung, eine trockene Anfahrkupplung, eine nasse Anfahrkupplung, eine Magnetpulverkupplung oder eine Fliehkraftkupplung einsetzbar sind. Es ist auch möglich, ein derartiges Anfahrelement in Kraftflussrichtung hinter dem Getriebe anzuordnen, wobei in diesem Fall die Antriebswelle 1 ständig mit der Kurbelwelle des Motors verbunden ist. Das Anfahren kann gemäß der Erfindung auch mittels eines Schaltelements des Getriebes erfolgen. Bevorzugt kann als Anfahrelement die Bremse 04, die sowohl im ersten Vorwärtsgang als auch im ersten Rückwärtsgang aktiviert ist, verwendet werden.

Das erfindungsgemäße Mehrstufengetriebe ermöglicht außerdem die Anordnung eines Torsionsschwingungsdämpfers zwischen Motor und Getriebe.

Im Rahmen einer weiteren, nicht dargestellten Ausführungsform der Erfindung kann auf jeder Welle, bevorzugt auf der Antriebswelle 1 oder der Abtriebswelle 2, eine verschleißfreie Bremse, wie z. B. ein hydraulischer oder elektrischer Retarder oder dergleichen, angeordnet sein, welches insbesondere für den Einsatz in Nutzkraftfahrzeugen von besonderer Bedeutung ist. Des weiteren kann zum Antrieb von zusätzlichen Aggregaten auf jeder Welle, bevorzugt auf der Antriebswelle 1 oder der Abtriebswelle 2, ein Nebenabtrieb vorgesehen sein.

Die eingesetzten Schaltelemente können als lastschaltende Kupplungen oder Bremsen ausgebildet sein. Insbesondere können kraftschlüssige Kupplungen oder Bremsen, wie z. B. Lamellenkupplungen, Bandbremsen und/oder Konuskupplungen, verwendet werden. Des weiteren können als Schaltelemente auch formschlüssige Bremsen und/oder Kupplungen, wie z. B. Synchronisierungen oder Klauenkupplungen eingesetzt werden.

Ein weiterer Vorteil des hier vorgestellten Mehrstufengetriebes besteht darin, dass auf jeder Welle als Generator und/oder als zusätzliche Antriebsmaschine eine elektrische Maschine anbringbar ist.

Die funktionalen Merkmale der Ansprüche können konstruktiv auf verschiedenartigste Weise ausgebildet sein. Der Einfachheit halber sind diese konstruktiven Ausbildungsmöglichkeiten nicht explizit beschrieben. Selbstverständlich fällt jedoch jede konstruktive Ausbildung der Erfindung, insbesondere jede räumliche Anordnung der Planetensätze und der Schaltelemente an sich sowie zueinander und soweit technisch sinnvoll, unter den Schutzumfang der Ansprüche.

### Bezugszeichen

- 1: Welle
- 2: Welle
- 3: Welle
- 4: Welle
- 5: Welle
- 6: Welle
- 7: Welle
- 03: Bremse
- 04: Bremse
- 14: Kupplung
- 26: Kupplung
- 36: Kupplung
- 57: Kupplung

- P1: Planetensatz
- P2: Planetensatz
- P3: Planetensatz
- An: Antrieb
- Ab: Abtrieb
- i: Übersetzung
- ϕ: Stufensprung
- G: Gehäuse

## Patentansprüche

1. Mehrstufengetriebe in Planetenbauweise, insbesondere ein Automatgetriebe für ein Kraftfahrzeug, drei Einsteg-Planetensätze (P1, P2, P3), mindestens sieben drehbare Wellen (1, 2, 3, 4, 5, 6, 7) umfassend eine Antriebswelle (1) und eine Abtriebswelle (2), welche in einem Gehäuse (G) angeordnet sind sowie mindestens sechs Schaltelemente (03, 04, 14, 26, 36, 57), umfassend Bremsen und Kupplungen, deren selektives Eingreifen verschiedene Übersetzungsverhältnisse zwischen der Antriebswelle (1) und der Abtriebswelle (2) bewirken, sodass sieben Vorwärtsgänge und ein Rückwärtsgang realisierbar sind, der Abtrieb über die Abtriebswelle (2) erfolgt, welche ständig mit dem Steg des dritten Planetensatzes (P3) verbunden ist, dass eine dritte Welle (3) ständig mit dem Sonnenrad des dritten Planetensatzes (P3) verbunden ist, dass eine fünfte Welle (5) ständig mit einem Element des zweiten Planetensatzes (P2) und dem Hohlrad des dritten Planetensatzes (P3) verbunden ist, dass eine sechste Welle (6) ständig mit einem weiteren Element des zweiten Planetensatzes (P2) verbunden ist, dass eine siebte Welle (7) ständig mit dem Steg des ersten Planetensatzes (P1) verbunden ist, **dadurch gekennzeichnet, dass** der Antrieb durch die Antriebswelle (1) erfolgt, welche ständig mit dem Sonnenrad des ersten Planetensatzes (P1) verbunden ist, dass eine vierte Welle (4) ständig mit dem Hohlrad des ersten Planetensatzes (P1) und dem Hohlrad des zweiten Planetensatzes (P2) verbunden ist, wobei die dritte Welle (3) durch eine erste Bremse (03) an das Gehäuse (G) ankoppelbar ist, die vierte Welle (4) durch eine zweite Bremse (04) an das Gehäuse (G) ankoppelbar ist, eine erste Kupplung (14) die Antriebswelle (1) und die vierte Welle (4) lösbar miteinander verbindet, eine zweite Kupplung (26) die Abtriebswelle (2) und die sechste Welle (6) lösbar miteinander verbindet, eine dritte Kupplung (36) die dritte Welle (3) und die sechste Welle (6) lösbar miteinander verbindet und wobei eine vierte Kupplung (57) die fünfte Welle (5) und die siebte Welle (7) lösbar miteinander verbindet.

2. Mehrstufengetriebe nach Anspruch 1, **dadurch gekennzeichnet, dass** die fünfte Welle (5) ständig mit dem Sonnenrad des zweiten Planetensatzes (P2) und dem Hohlrad des dritten Planetensatzes (P3) verbunden ist und dass die sechste Welle (6) ständig mit dem Steg des zweiten Planetensatzes (P2) verbunden ist.

3. Mehrstufengetriebe nach Anspruch 1, **dadurch gekennzeichnet, dass** die fünfte Welle (5) ständig mit dem Steg des zweiten Planetensatzes (P2) und dem Hohlrad des dritten Planetensatzes (P3) verbunden ist und dass die sechste Welle (6) ständig mit dem Sonnenrad des zweiten Planetensatzes (P2) verbunden ist.

4. Mehrstufengetriebe nach einem der Ansprüche 1 bis 3, **dadurch gekennzeichnet, dass** der erste Planetensatz (P1) und der dritte Planetensatz (P3) als Minus-Planetensätze ausgebildet sind und dass der zweite Planetensatz (P2) als Plus-Planetensatz ausgebildet ist.

5. Mehrstufengetriebe nach einem der vorstehenden Ansprüche, **dadurch gekennzeichnet, dass** an jeder geeigneten Stelle zusätzliche Freiläufe einsetzbar sind.

6. Mehrstufengetriebe nach Anspruch 5, **dadurch gekennzeichnet, dass** die Freiläufe zwischen den Wellen (1, 3, 3, 4, 5, 6, 7) und dem Gehäuse (G) vorgesehen sind.

7. Mehrstufengetriebe nach einem der vorstehenden Ansprüche, **dadurch gekennzeichnet, dass** Antrieb und Abtrieb auf der gleichen Seite des Gehäuses vorgesehen sind.

8. Mehrstufengetriebe nach einem der vorstehenden Ansprüche, **dadurch gekennzeichnet, dass** ein Achs- und/oder ein Verteilerdifferential auf der Antriebsseite oder der Abtriebsseite angeordnet ist.

9. Mehrstufengetriebe nach einem der vorstehenden Ansprüche, **dadurch gekennzeichnet, dass** die Antriebswelle (1) durch ein Kupplungselement von einem Antriebs-Motor trennbar ist.

10. Mehrstufengetriebe nach Anspruch 9, **dadurch gekennzeichnet, dass** als Kupplungselement ein hydrodynamischer Wandler, eine hydraulische Kupplung, eine trockene Anfahrkupplung, eine nasse Anfahrkupplung, eine Magnetpulverkupplung oder eine Fliehkraftkupplung vorgesehen ist.

11. Mehrstufengetriebe nach einem der vorstehenden Ansprüche, **dadurch gekennzeichnet, dass** in Kraftflussrichtung hinter dem Getriebe ein externes Anfahrelement, insbesondere nach Anspruch 10, anordbar ist, wobei die Antriebswelle (1) fest mit der Kurbelwelle des Motors verbunden ist.

12. Mehrstufengetriebe nach einem der vorstehenden Ansprüche, **dadurch gekennzeichnet, dass** das Anfahren mittels eines Schaltelements des Getriebes erfolgt, wobei die Antriebswelle (1) ständig mit der Kurbelwelle des Motors verbunden ist.

13. Mehrstufengetriebe nach Anspruch 12, **dadurch gekennzeichnet, dass** als Schaltelement die vierte Kupplung (57) oder die zweite Bremse (04) einsetzbar ist.

14. Mehrstufengetriebe nach einem der vorstehenden Ansprüche, **dadurch gekennzeichnet, dass** zwischen Motor und Getriebe ein Torsionsschwingungsdämpfer anordbar ist.

15. Mehrstufengetriebe nach einem der vorstehenden Ansprüche, **dadurch gekennzeichnet, dass** auf jeder Welle eine verschleißfreie Bremse anordbar ist.

16. Mehrstufengetriebe nach einem der vorstehenden Ansprüche, **dadurch gekennzeichnet, dass** zum Antrieb von zusätzlichen Aggregaten auf jeder Welle ein Nebenabtrieb anordbar ist.

17. Mehrstufengetriebe nach Anspruch 16, **dadurch gekennzeichnet, dass** der Nebenabtrieb auf der Antriebswelle (1) oder der Abtriebswelle (2) anordbar ist.

18. Mehrstufengetriebe nach einem der vorstehenden Ansprüche, **dadurch gekennzeichnet, dass** die Schaltelemente als lastschaltende Kupplungen oder Bremsen ausgebildet sind.

19. Mehrstufengetriebe nach Anspruch 18, **dadurch gekennzeichnet, dass** Lamellenkupplungen, Bandbremsen und/oder Konuskupplungen einsetzbar sind.

20. Mehrstufengetriebe nach einem der Ansprüche 1 bis 17, **dadurch gekennzeichnet, dass** als Schaltelemente formschlüssige Bremsen und/oder Kupplungen vorgesehen sind.

21. Mehrstufengetriebe nach einem der vorstehenden Ansprüche, **dadurch gekennzeichnet, dass** auf jeder Welle als Generator und/oder als zusätzliche Antriebsmaschine eine elektrische Maschine anbringbar ist.

## Claims

1. Multi-step transmission of planetary type of construction, in particular an automatic transmission for a motor vehicle, comprising three single-flight planet sets (P1, P2, P3), at least seven rotatable shafts (1, 2, 3, 4, 5, 6, 7), a drive shaft (1) and an output shaft (2) which are arranged in a housing (G) and at least six shift elements (03, 04, 14, 26, 36, 57), comprising brakes and clutches, the selective engagement of which cause different step-up ratios between the drive shaft (1) and the output shaft (2), so that seven forward gears and one reverse gear can be implemented, the output taking place via the output shaft (2) which is constantly connected to the flight of the third planet set (P3), a third shaft (3) being constantly connected to the sun wheel of the third planet set (P3), a fifth shaft (5) being constantly connected to an element of the second planet set (P2) and to the ring wheel of the third planet set (P3), a sixth shaft (6) being constantly connected to a further element of the second planet set (P2), a seventh shaft (7) being constantly connected to the flight of the first planet set (P1), **characterized in that** the drive takes place by means of the drive shaft (1) which is constantly connected to the sun wheel of the first planet set (P1), **in that** a fourth shaft (4) is constantly connected to the ring wheel of the first planet set (P1) and to the ring wheel of the second planet set (P2), the third shaft (3) being coupleable to the housing (G) by means of a first brake (03), the fourth shaft (4) being coupleable to the housing (G) by means of a second brake (04), a first clutch (14) releasably connecting the drive shaft (1) and the fourth shaft (4) to one another, a second clutch (26) releasably connecting the drive shaft (2) and the sixth shaft (6) to one another, a third clutch (36) releasably connecting the third shaft (3) and the sixth shaft (6) to one another, and a fourth clutch (57) releasably connecting the fifth shaft (5) and the seventh shaft (7) to one another.

2. Multi-step transmission according to Claim 1, **characterized in that** the fifth shaft (5) is constantly connected to the sun wheel of the second planet set (P2) and to the ring wheel of the third planet set (P3), and **in that** the sixth shaft (6) is constantly connected to the flight of the second planet set (P2).

3. Multi-step transmission according to Claim 1, **characterized in that** the fifth shaft (5) is constantly connected to the flight of the second planet set (P2) and to the ring wheel of the third planet set (P3), and **in that** the sixth shaft (6) is constantly connected to the sun wheel of the second planet set (P2).

4. Multi-step transmission according to one of Claims 1 to 3, **characterized in that** the first planet set (P1) and the third planet set (P3) are designed as minus planet sets and **in that** the second planet set (P2) is designed as a plus planet set.

5. Multi-step transmission according to one of the preceding claims, **characterized in that** additional freewheels can be used at each suitable location.

6. Multi-step transmission according to Claim 5, **characterized in that** the freewheels are provided between the shafts (1, 2, 3, 4, 5, 6, 7) and the housing (G).

7. Multi-step transmission according to one of the preceding claims, **characterized in that** the drive and the output are provided on the same side of the housing.

8. Multi-step transmission according to one of the preceding claims, **characterized in that** an axle differential and/or a divider differential are/is arranged on the drive side or on the output side.

9. Multi-step transmission according to one of the preceding claims, **characterized in that** the drive shaft (1) can be separated from an engine by means of a clutch element.

10. Multi-step transmission according to Claim 9, **characterized in that** the clutch element provided is a hydrodynamic converter, a hydraulic clutch, a dry starting clutch, a wet starting clutch, a magnetic-powder clutch or a centrifugal clutch.

11. Multi-step transmission according to one of the preceding claims, **characterized in that** an external starting element, in particular according to Claim 10, can be arranged downstream of the transmission in the force flux direction, the drive shaft (1) being connected fixedly to the crankshaft of the engine.

12. Multi-step transmission according to one of the preceding claims, **characterized in that** starting takes place by means of a shift element of the transmission, the drive shaft (1) being constantly connected to the crankshaft of the engine.

13. Multi-step transmission according to Claim 12, **characterized in that** the fourth clutch (57) or the second brake (04) can be used as shift element.

14. Multi-step transmission according to one of the preceding claims, **characterized in that** a tortional vibration damper can be arranged between the engine and transmission.

15. Multi-step transmission according to one of the preceding claims, **characterized in that** a wear-free brake can be arranged on each shaft.

16. Multi-step transmission according to one of the preceding claims, **characterized in that** a secondary output can be arranged on each shaft for the drive of additional assemblies.

17. Multi-step transmission according to Claim 16, **characterized in that** the secondary output can be arranged on the drive shaft (1) or on the output shaft (2).

18. Multi-step transmission according to one of the preceding claims, **characterized in that** the shift elements are designed as load-shifting clutches or brakes.

19. Multi-step transmission according to Claim 18, **characterized in that** multiple-disc clutches, band brakes and/or cone clutches can be used.

20. Multi-step transmission according to one of Claims 1 to 17, **characterized in that** positive brakes and/or clutches are provided as shift elements.

21. Multi-step transmission according to one of the preceding claims, **characterized in that** an electric machine can be mounted on each shaft as a generator and/or as an additional power plant.

## Revendications

1. Boîte de vitesses multiétagée de construction planétaire, notamment boîte de vitesses automatique pour un véhicule automobile, comprenant trois trains planétaires (P1, P2, P3) avec un porte-satellites, au moins sept arbres rotatifs (1, 2, 3, 4, 5, 6, 7) comprenant un arbre d'entraînement (1) et un arbre de sortie (2) qui sont disposés dans un boîtier (G), et au moins six éléments de commutation (03, 04, 14, 26, 36, 57) comprenant des freins et des embrayages, dont l'engagement sélectif génère différents rapports de transmission entre l'arbre d'entraînement (1) et l'arbre de sortie (2), de sorte que sept marches avant et une marche arrière puissent être réalisées, la sortie s'effectuant par l'intermédiaire de l'arbre de sortie (2), qui est relié en permanence au porte-satellites du troisième train planétaire (P3), un troisième arbre (3) étant relié en permanence au planétaire du troisième train planétaire (P3), un cinquième arbre (5) étant relié en permanence à un élément du deuxième train planétaire (P2) et à la couronne du troisième train planétaire (P3), un sixième arbre (6) étant relié en permanence à un autre élément du deuxième train planétaire (P2), un septième arbre (7) étant relié en permanence au porte-satellites du premier train planétaire (P1), **caractérisée en ce que** l'entraînement s'effectue par l'arbre d'entraînement (1), qui est relié en permanence au planétaire du premier train planétaire (P1), **en ce qu'**un quatrième arbre (4) est relié en permanence à la couronne du premier train planétaire (P1) et à la couronne du deuxième train planétaire (P2), le troisième arbre (3) pouvant être accouplé par un premier frein (03) au boîtier (G), le quatrième arbre (4) pouvant être accouplé par un deuxième frein (04) au boîtier (G), un premier embrayage (14) reliant l'arbre d'entraînement (1) et le quatrième arbre (4) de manière amovible l'un à l'autre, un deuxième embrayage (26) reliant l'arbre de sortie (2) et le sixième arbre (6) de manière amovible l'un à l'autre, un troisième embrayage (36) reliant le troisième arbre (3) et le sixième arbre (6) de manière amovible l'un à l'autre, et un quatrième embrayage (57) reliant le cinquième arbre (5) et le septième arbre (7) de manière amovible l'un à l'autre.

2. Boîte de vitesses multiétagée selon la revendication 1, **caractérisée en ce que** le cinquième arbre (5) est relié de manière permanente au planétaire du deuxième train planétaire (P2) et à la couronne du troisième train planétaire (P3) et **en ce que** le sixième arbre (6) est relié de manière permanente au porte-satellites du deuxième train planétaire (P2).

3. Boîte de vitesses multiétagée selon la revendication 1, **caractérisée en ce que** le cinquième arbre (5) est relié de manière permanente au porte-satellites du deuxième train planétaire (P2) et à la couronne du troisième train planétaire (P3) et **en ce que** le sixième arbre (6) est relié de manière permanente au planétaire du deuxième train planétaire (P2).

4. Boîte de vitesses multiétagée selon l'une quelconque des revendications 1 à 3, **caractérisée en ce que** le premier train planétaire (P1) et le troisième train planétaire (P3) sont réalisés sous forme de trains planétaires négatifs et le deuxième train planétaire (P2) est réalisé sous forme de train planétaire positif.

5. Boîte de vitesses multiétagée selon l'une quelconque des revendications précédentes, **caractérisée en ce que** l'on peut utiliser des roues libres supplémentaires à chaque emplacement approprié.

6. Boîte de vitesses multiétagée selon la revendication 5, **caractérisée en ce que** les roues libres sont prévues entre les arbres (1, 2, 3, 4, 5, 6, 7) et le boîtier (G).

7. Boîte de vitesses multiétagée selon l'une quelconque des revendications précédentes, **caractérisée en ce que** l'entraînement et la sortie sont prévus du même côté du boîtier.

8. Boîte de vitesses multiétagée selon l'une quelconque des revendications précédentes, **caractérisée en ce qu'**un différentiel d'essieu et/ou un différentiel central sont disposés sur le côté d'entraînement ou sur le côté de sortie.

9. Boîte de vitesses multiétagée selon l'une quelconque des revendications précédentes, **caractérisée en ce que** l'arbre d'entraînement (1) peut être séparé d'un moteur d'entraînement par un élément d'embrayage.

10. Boîte de vitesses multiétagée selon la revendication 9, **caractérisée en ce que** l'on prévoit comme élément d'embrayage un convertisseur hydrodynamique, un embrayage hydraulique, un embrayage de démarrage sec, un embrayage de démarrage humide, un embrayage à poudre magnétique, ou un embrayage à force centrifuge.

11. Boîte de vitesses multiétagée selon l'une quelconque des revendications précédentes, **caractérisée en ce qu'**un élément de démarrage externe, notamment selon la revendication 10, peut être disposé dans la direction du flux de force derrière la transmission, l'arbre d'entraînement (1) étant relié fixement au vilebrequin du moteur.

12. Boîte de vitesses multiétagée selon l'une quelconque des revendications précédentes, **caractérisée en ce que** le démarrage s'effectue au moyen d'un élément de commutation de la transmission, l'arbre d'entraînement (1) étant relié de façon permanente au vilebrequin du moteur.

13. Boîte de vitesses multiétagée selon la revendication 12, **caractérisée en ce que** l'on peut utiliser comme élément de commutation le quatrième embrayage (57) ou le deuxième frein (04).

14. Boîte de vitesses multiétagée selon l'une quelconque des revendications précédentes, **caractérisée en ce que** l'on peut disposer entre le moteur et la transmission un amortisseur d'oscillations de torsion.

15. Boîte de vitesses multiétagée selon l'une quelconque des revendications précédentes, **caractérisée en ce que** l'on peut disposer sur chaque arbre un frein sans friction.

16. Boîte de vitesses multiétagée selon l'une quelconque des revendications précédentes, **caractérisée en ce que** l'on peut disposer sur chaque arbre une sortie auxiliaire pour l'entraînement d'unités supplémentaires.

17. Boîte de vitesses multiétagée selon la revendication 16, **caractérisée en ce que** la sortie auxiliaire peut être disposée sur l'arbre d'entraînement (1) ou l'arbre de sortie (2).

18. Boîte de vitesses multiétagée selon l'une quelconque des revendications précédentes, **caractérisée en ce que** les éléments de commutation sont réalisés sous forme d'embrayages à commutation de charge ou sous forme de freins.

19. Boîte de vitesses multiétagée selon la revendication 18, **caractérisée en ce que** des embrayages multidisques, des freins à bande et/ou des embrayages à cône peuvent être utilisés.

20. Boîte de vitesses multiétagée selon l'une quelconque des revendications 1 à 17, **caractérisée en ce que** l'on prévoit comme éléments de commutation des embrayages et/ou des freins à engagement positif.

21. Boîte de vitesses multiétagée selon l'une quelconque des revendications précédentes, **caractérisée en ce que** l'on peut monter sur chaque arbre en tant que générateur et/ou en tant que moteur d'entraînement supplémentaire un moteur électrique.
